# EUROPEAN PATENT APPLICATION

(11) **EP 4 478 579 A1**
(43) Date of publication of application: **18.12.2024**
(21) Application number: 23753002.7
(22) Date of filing: 11.01.2023
(51) Int. Cl.: H02J 7/00, H01M 10/42

(54) **BATTERY CHARGE/DISCHARGE DEVICE**

(30) Priority: 11.02.2022 KR 20220017933
(71) Applicant: WONIK PNE CO., LTD., Suwon-si, Gyeonggi-do 16648 (KR)
(72) Inventor: KIM, Byunghum, Suwon-si, Gyeonggi-do 16648 (KR); HUR, Minho, Suwon-si, Gyeonggi-do 16648 (KR); KIM, Hyoungjoong, Suwon-si, Gyeonggi-do 16648 (KR)
(74) Representative: Stöckeler, Ferdinand
(86) International application number: PCT/KR2023/000485
(87) International publication number: WO 2023/153651

(57) **Abstract**

Proposed is a battery charge/discharge device which solves a discontinuity problem caused by a battery capacity difference in a constant-current mode of collectively charging or discharging multiple batteries connected in series. The proposed device comprises: a main power conversion unit which charges or discharges multiple batteries connected in series; multiple auxiliary power conversion units which charge or discharge the multiple batteries, respectively; and a control unit which controls the main power conversion unit to perform constant-voltage control of the multiple batteries on the basis of a total voltage obtained by summing the voltages of the multiple batteries in a constant-voltage interval for the multiple batteries, and controls the multiple auxiliary power conversion units to maintain the voltage of each of the multiple batteries at a target voltage of a corresponding battery.

## Description

### [Technical Field]

The present disclosure relates to a battery charging and discharging device, and more particularly, to a device that charges and discharges a battery in which multiple battery cells are connected in series.

### [Background Art]

A secondary battery production process may basically include an electrode process, an assembly process, and a formation process.

The electrode process is a process of producing a positive electrode and negative electrode of a secondary battery. The assembly process is a process of packaging the electrodes and a separator in an aluminum sheet by stacking and then rolling the electrodes and the separator. The formation process is a process of activating chemical substances within the secondary battery by charging and discharging the secondary battery several times. Equipment that is used in the formation process is charging and discharging equipment.

The charging and discharging equipment basically includes a power conversion device that supplies charging and discharging power and a jig device that physically connects a battery to the equipment. Furthermore, the charging and discharging equipment includes wires that connect the power conversion device and the jig device.

As electric vehicles are recently distributed, the secondary battery market is expanded from a low-capacity application market for portable electronic devices to a high-capacity market at high speed. Furthermore, the capacity of the secondary battery tends to continuously increase.

Due to the increase of the capacity of the secondary battery, the capacity of equipment that is used for the manufacturing of the battery is also proportionally increased.

The increase of the capacity of the equipment leads to an increase of the volume and generation of heat of the equipment and an increase of power consumption in a production line, thus increasing a need for high efficiency equipment.

The voltage of the secondary battery is commonly low, that is, 5 V or less. This degrades efficiency of the power conversion device and leads to an increase of the proportion of a loss in the wire.

Serial formation equipment may increase power conversion efficiency by connecting cells in series and charging and discharging the cells en bloc by using a high voltage power conversion device. Furthermore, the serial formation equipment can also reduce a loss in the wire by reducing the number of wires that connect the power conversion device and the jig device.

However, if cells are connected in series and charged and discharged, a cell in which a failure has occurred during a charging and discharging process or a cell that has reached an end condition needs to be bypassed due to a difference between the capacities of cells. A relay is additionally added for such a bypass.

In a transfer process of bypassing a cell by using the relay, there is a problem in that a discontinuity interval in which a current is turned off cannot be avoided.

The contents described in the Background Art are to help the understanding of the background of the disclosure, and may include contents that are not a disclosed conventional technology.

### [Disclosure]

### [Technical Problem]

The present disclosure has been proposed by considering the aforementioned conventional circumstances, and an object of the present disclosure is to provide a battery charging and discharging device which solves a discontinuity problem attributable to a difference between the capacities of multiple cells in a constant current mode in which the cells that are connected in series are charged and discharged en bloc.

Another object of the present disclosure is to provide a battery charging and discharging device which prevents the overcharging of an individual cell by using an auxiliary power conversion device that is connected to each cell in parallel in a constant voltage mode in which multiple cells that are connected in series are charged and discharged en bloc.

Still another object of the present disclosure is to provide a battery charging and discharging device having the same constant voltage operation time as that of the existing parallel type charger and discharger.

Yet another object of the present disclosure is to provide a battery charging and discharging device which allows a high voltage main power conversion device and a low voltage auxiliary power conversion device to be independently controlled and to operate through a simple control algorithm.

Yet another object of the present disclosure is to provide a battery charging and discharging device which can reduce a loss by allowing the high voltage main power conversion device and the low voltage auxiliary power conversion device to share a direct current link, to recover discharging energy that is generated in a process of the auxiliary power conversion device operating through the direct current link, and to reuse the discharging energy as charging energy for the high voltage main power conversion device.

### [Technical Solution]

In order to achieve the objects, a battery charging and discharging device according to a preferred embodiment of the present disclosure includes a main power conversion unit configured to charge and discharge multiple cells that are connected in series, multiple auxiliary power conversion units configured to charge and discharge the multiple cells, respectively, and a control unit configured to control the main power conversion unit so that constant voltage control is performed on the multiple cells based on a total voltage of the voltages of the multiple cells and to control the multiple auxiliary power conversion units so that the voltage of each of the multiple cells is maintained at a target voltage of a corresponding cell in a constant voltage interval for the multiple cells.

The control unit may suppress the voltage of a cell that first reaches the target voltage, among the multiple cells, in the constant voltage interval from rising more than the target voltage by operating a corresponding auxiliary power conversion unit.

The auxiliary power conversion unit may maintain the voltage of the cell that first reaches the target voltage at the target voltage by discharging the cell that first reaches the target voltage.

A preferred embodiment of the present disclosure may further include multiple transfer switch units connected to the multiple cells, respectively, in a one-to-one way and each configured to perform a connection and separation between each cell and the main power conversion unit.

The transfer switch unit may further include a serial switch unit that is connected to each of the multiple cells in series and a bypass switch unit that is connected to each of the multiple cells in parallel. The serial switch unit may include first and second semiconductor relays that are mutually connected in series and first and second diodes that are connected to the first and second semiconductor relays in parallel, respectively. The bypass switch unit may include third and fourth semiconductor relays that are mutually connected in series and third and fourth diodes that are connected to the third and fourth semiconductor relays in parallel, respectively.

In the constant voltage interval, the main power conversion unit may supply energy to the multiple cells that are connected in series through the serial switch unit, and the auxiliary power conversion unit may suppress the overcharging of an individual cell attributable to a difference between the capacities of the multiple cells.

The control unit may detect a cell that is overcharged, among the multiple cells, in the constant voltage interval, may determine whether the detected cell satisfies a specific bypass condition, and may bypass the transfer switch unit corresponding to the detected cell when the specific bypass condition is satisfied by controlling the transfer switch unit.

The specific bypass condition may be one or more of the maintenance of a voltage of the detected cell at a voltage higher than a target voltage for a predetermined time and the generation of a voltage peak higher than the target voltage more than a certain number of times.

The main power conversion unit may perform a constant voltage operation based on a total voltage of the remaining cells except the bypassed cell as the detected cell is bypassed.

The control unit may bypass a cell that first reaches a set voltage or an end condition in a constant current interval in which the multiple cells that are connected in series are charged and discharged through the main power conversion unit, and may bypass the cell that has reached the set voltage or the end condition in a state in which the current of the main current conversion unit flows, by individually controlling the serial switch unit and the bypass switch unit.

The control unit may enable the main power conversion unit to perform a constant current operation when a constant current charge interval is started, and may turn on the first and second semiconductor relays and turn off the third and fourth semiconductor relays. In this case, the current of the main current conversion unit may not flow into a bypass path by the third diode that is connected to the third semiconductor relay, which has been turned off, in parallel.

The control unit may turn on the third and fourth semiconductor relays and then turn off the first semiconductor relay, after turning off the second semiconductor relay that has been turned on with respect to a corresponding cell on which a bypass condition has been established in a state in which the current of the main power conversion unit flows when the bypass condition is established in one or more cells during an operation in the constant current charge interval. In this case, the second diode that is connected to the second semiconductor relay in parallel may prevent the generation of a short circuit attributable to a cell that is reversely biased and that has reached a set voltage or an end condition, when the third and fourth semiconductor relays is turned on after the second semiconductor relay is turned off.

The control unit may cause the main power conversion unit to perform a constant current operation when a constant current discharge interval is started, and may turn on the first and second semiconductor relays and turn off the third and fourth semiconductor relays. In this case, the current of the main current conversion unit may not flow into a bypass path by the fourth diode that is connected to the fourth semiconductor relay, which has been turned off, in parallel.

The control unit may turn off the first and second semiconductor relays and then turn on the third semiconductor relay, after turning on the fourth semiconductor relay that has been turned off with respect to a corresponding cell on which a bypass condition has been established in the state in which a current of the main power conversion unit flows when the bypass condition is established in one or more cells during an operation in the constant current discharge interval. In this case, the third diode that is connected to the third semiconductor relay in parallel may prevent the generation of a short circuit attributable to a cell that is reversely biased and that has reached a set voltage or an end condition although the fourth semiconductor relay that has been turned off is turned on.

A rated capacity of the auxiliary power conversion unit may be smaller than a rated capacity of the main power conversion unit.

### [Advantageous Effects]

According to the present disclosure having such a construction, when the voltage of a cell that has first reached a set voltage or an end condition due to a difference between the capacities of the cells in the constant current interval in which multiple cells that are connected in series are charged and discharged by using the main power conversion unit having a high voltage is bypassed, static transfer is possible by bypassing the cell in the state in which the current of the main power conversion unit flows, by individually controlling the serial relay and the bypass relay each composed of the solid state relay (SSR) circuit using the switch elements. In other words, a cell having a low capacity or a failed cell can be separated without interruption while maintaining a constant current operation of the main power conversion unit, by individually controlling two switches within the SSR by substituting, with the SSR using the switch element, the serial relay that connects a cell and a cell and the bypass relay that separates a cell from the main power conversion unit. The same characteristics as those in a conventional individual charging and discharging method can be maintained without affecting the characteristics of the cell.

In the constant voltage interval, the main power conversion unit having a high voltage is used as a main power supply that charges and discharges multiple cells that are connected in series, and the auxiliary power conversion unit that is connected to an individual cell in parallel is constructed for a low capacity that is used to compensate only a difference between the capacities of cells. Accordingly, the auxiliary power conversion unit may perform constant voltage control based a total voltage of the voltages of cells that are connected thereto in series, and may perform an individual constant voltage operation for constant voltage control on the basis of a target voltage of an individual cell. In other words, when the auxiliary power conversion unit is made to perform a constant voltage operation on the basis of the voltage of an individual cell in an interval in which a constant voltage operation is performed by using the main power conversion unit, the overcharging of a cell having a low capacity, which occurs due to a difference between the capacities of cells that are connected in series, can be prevented and the same constant voltage interval characteristics as those in a conventional individual charging and discharging method can be maintained.

The main power conversion unit can perform constant voltage control based on a total value of the voltages of cells that are connected in series, regardless of a voltage drop in a wire and a contact part, which occurs in a process of connecting the cells in series, by adding the control unit that measures the voltage of an individual cell, summing the measured voltages, and transmitting the total voltage to the main power conversion unit.

The device that charges and discharges secondary batteries by connecting the secondary batteries in series according to an embodiment of the present disclosure can improve conversion efficiency of the power conversion device because the main power conversion unit can be constructed to have an output voltage of a high voltage compared to the existing method of charging and discharging an individual cell.

A loss in a wire can be significantly reduced because the number of wires that connect the power conversion device and secondary batteries can be proportionally reduced by increasing the number of secondary batteries that are connected in series.

An operation in the constant voltage interval can be finished at the same time as that in a conventional individual charging and discharging method because a voltage drop that occurs in a wire and the SSR that are added for a serial connection between cells can be removed from a feedback voltage for control if the voltages of individual cells are summed and the main power conversion unit is controlled in the constant voltage mode.

### [Description of Drawings]

FIG. 1 is a diagram illustrating a battery charging and discharging device according to an embodiment of the present disclosure.
FIG. 2 is a diagram illustrating an operation state for each step when bypass using a relay is applied in a constant current interval.
FIG. 3 is a diagram illustrating an operation state for each step during a static transfer bypass process in the constant current interval according to an embodiment of the present disclosure, and is a diagram illustrating a cell transfer process during a charging process.
FIG. 4 is a diagram illustrating an operation state for each step during a static transfer bypass process in the constant current interval according to an embodiment of the present disclosure, and is a diagram illustrating a cell transfer process during a discharging process.
FIG. 5 is a diagram illustrating an individual cell constant voltage operation state in a constant voltage interval according to an embodiment of the present disclosure.
FIG. 6 is a diagram illustrating charging and discharging characteristics of secondary batteries having a capacity difference according to an embodiment of the present disclosure.

### [Mode for Invention]

The present disclosure may be changed in various ways and may have various embodiments. Specific embodiments are to be illustrated in the drawings and specifically described.

It should be understood that the present disclosure is not intended to be limited to the specific embodiments, but includes all of changes, equivalents and/or substitutions included in the spirit and technical range of the present disclosure.

Terms used in the present application are used to merely describe specific embodiments and are not intended to restrict the present disclosure. An expression of the singular number includes an expression of the plural number unless clearly defined otherwise in the context. In the present application, it is to be understood that a term, such as "include" or "have", is intended to designate that a characteristic, a number, a step, an operation, a component, a part or a combination of them described in the specification is present, and does not exclude the presence or addition possibility of one or more other characteristics, numbers, steps, operations, components, parts, or combinations of them in advance.

All terms used herein, including technical terms or scientific terms, have the same meanings as those commonly understood by a person having ordinary knowledge in the art to which the present disclosure pertains, unless defined otherwise in the specification. Terms, such as those defined in commonly used dictionaries, should be construed as having the same meanings as those in the context of a related technology, and are not construed as ideal or excessively formal meanings unless explicitly defined otherwise in the specification.

Meanwhile, in embodiments according to the concept of the present disclosure, a step that is used to represent the operation state of a switch has been exemplified in order to describe an operation state according to the concept of the present disclosure, and it is not limited to the described embodiments and includes an operation sequence for various individual switches for implementing an operation state according to the same concept.

Hereinafter, preferred embodiments of the present disclosure are more specifically described with reference to the accompanying drawings. In describing the present disclosure, in order to help general understanding, the same reference numerals are used to denote the same components throughout the drawings, and a redundant description of the same components is omitted.

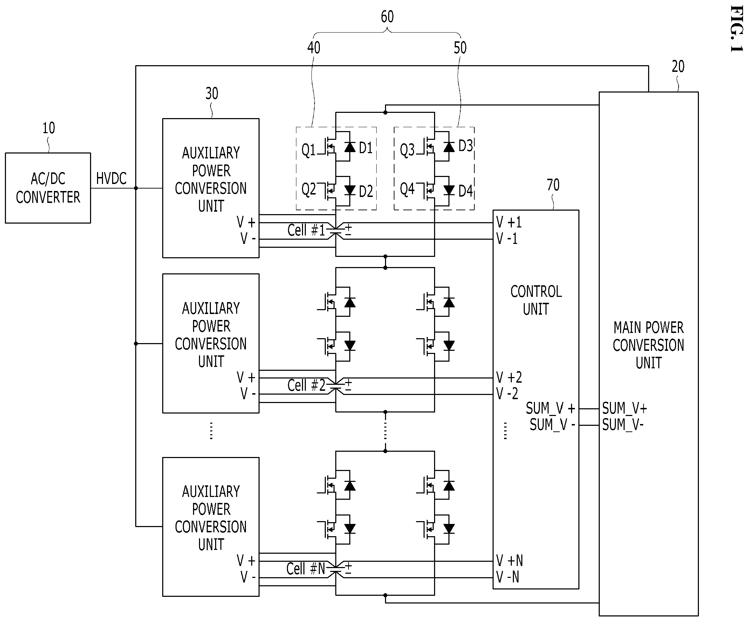

FIG. 1 is a diagram illustrating a battery charging and discharging device according to an embodiment of the present disclosure.

The battery charging and discharging device of FIG. 1 may include an AC/DC converter 10, a main power conversion unit 20, an auxiliary power conversion unit 30, a transfer switch unit 60, and a control unit 70.

The AC/DC converter 10 may receive commercial AC power and convert the received commercial AC power into high-voltage DC power.

The high-voltage DC power that is output by the AC/DC converter 10 may be applied to the main power conversion unit 20 and the auxiliary power conversion unit 30.

The AC/DC converter 10 is capable of bidirectional power conversion because the AC stage of the AC/DC converter needs to transmit energy to the DC stage thereof in a charging mode and the DC stage of the AC/DC converter needs to transmit energy to the AC stage thereof in a discharging mode.

Meanwhile, in a DC distribution in which DC power is directly supplied to the device, the AC/DC converter 10 may be omitted.

The main power conversion unit 20 may charge and discharge multiple cells Cell #1 to #N that are connected in series en bloc. That is, the multiple cells Cell #1 to #N are mutually connected in series between one end and the other end of the main power conversion unit 20.

The main power conversion unit 20 may charge and discharge the multiple cells Cell #1 to #N that are connected in series en block through the transfer switch units 60 because the transfer switch unit 60 is connected to each of the cells Cell #1 to #N. In the specification of the present disclosure, the cells Cell #1 to #N may be considered to mean a secondary battery.

For example, the main power conversion unit 20 may be composed of a bidirectional DC/DC converter having a high voltage.

The main power conversion unit 20 may be considered to include a constant voltage controller (not illustrated) and a constant current controller (not illustrated) because the main power conversion unit is used both in a constant current interval and a constant voltage interval.

Multiple auxiliary power conversion units 30 are connected to the output stage of the AC/DC converter 10 in parallel, and may be installed as many as the number of multiple cells Cell #1 to #N.

The auxiliary power conversion unit 30 is connected to a corresponding cell, among the multiple cells Cell #1 to #N, in a one-to-one way. For example, the auxiliary power conversion unit 30 may be connected to a corresponding cell in parallel.

The auxiliary power conversion unit 30 can prevent the overcharging and overdischarging of an individual cell and control the individual cell at a set voltage in the constant voltage interval.

For example, the auxiliary power conversion unit 30 may be composed of a one-way DC/DC converter having a low voltage.

The auxiliary power conversion unit 30 may be considered to include a constant voltage controller (not illustrated) because the auxiliary power conversion unit is used only in the constant voltage interval.

In general, the auxiliary power conversion unit 30 may be constructed unidirectionally because a constant voltage mode is used only in charging in formation equipment that is used in a process of producing a cell. However, if the constant voltage mode is used even in discharging, the auxiliary power conversion unit 30 may be constructed bidirectionally and applied. In other words, in general, the constant voltage mode is used only in charging, but the auxiliary power conversion unit 30 may be constructed exclusively for discharging in order to reduce the capacity and size of an individual auxiliary power conversion unit 30. In this case, the rated capacity of the auxiliary power conversion unit 30 may be limited to approximately 5% to 10% or less of the rated capacity of the main power conversion unit 20. In this case, the rated capacity may mean power that is consumed upon charging and discharging of the power conversion units 20 and 30. Alternatively, in the present specification, the rated capacity may mean a current (in this case, a rated current) that is input and output or a voltage (in this case, a rated voltage) that is applied upon charging and discharging of the power conversion units 20 and 30. That is, the rated capacity may be understood as a concept that embraces the rated current and/or the rated voltage.

The AC/DC converter 10, the main power conversion unit 20, and the auxiliary power conversion unit 30 may be commonly called a power conversion device.

The transfer switch unit 60 performs a connection and separation between a cell and the main power conversion unit 20, and may perform static transfer.

The transfer switch unit 60 may be connected to a cell in a one-to-one way.

The transfer switch unit 60 includes a serial switch unit 40 and a bypass switch unit 50.

The serial switch unit 40 may connect the multiple cells Cell #1 to #N to the main power conversion unit 20 in series.

The serial switch unit 40 is connected to a corresponding cell in series.

For example, the serial switch unit 40 may be composed of a semiconductor relay (solid state relay (SSR)) using switch elements Q1 and Q2. In this case, the switch elements Q1 and Q2 may each be composed of an FET, etc.

The serial switch unit 40 includes the two switch elements Q1 and Q2 that are mutually connected in series internally. Each of the switch elements Q1 and Q2 may be designed in a structure in which each of the switch elements is individually controlled by the control unit 70.

The bypass switch unit 50 may separate each of the multiple cells Cell #1 to #N from the main power conversion unit 20, and may form a path for a current.

The bypass switch unit 50 is connected to a corresponding cell in parallel.

For example, the bypass switch unit 50 may be composed of a semiconductor relay (solid state relay (SSR)) using switch elements Q3 and Q4. In this case, the switch elements Q3 and Q4 may each be composed of an FET, etc.

The bypass switch unit 50 includes the two switch elements Q3 and Q4 that are mutually connected in series internally. Each of the switch elements Q3 and Q4 may be designed in a structure in which each of the switch elements is individually controlled by the control unit 70.

A diode D1 is connected to the switch element Q1 in parallel. The diode D1 may be backward connected to a charging path, and may be forward connected to a discharging path.

A diode D2 is connected to the switch element Q2 in parallel. The diode D2 may be forward connected to the charging path, and may be backward connected to the discharging path.

A diode D3 is connected to the switch element Q3 in parallel. The diode D3 may be backward connected to the charging path, and may be forward connected to the discharging path.

A diode D4 is connected to the switch element Q4 in parallel. The diode D4 may be forward connected to the charging path, and may be backward connected to the discharging path.

That is, the diodes D1 and D3 may be connected in the same direction. The diodes D2 and D4 may be connected in the same direction. The diodes D1 and D2 may be connected in opposite directions. The diodes D3 and D4 may be connected in opposite directions.

An internal diode of a corresponding switch element may be used as each of the diodes D1, D2, D3, and D4 that are connected to the switch elements Q1, Q2, Q3, and Q4 in parallel, without adding a diode separately. However, a diode capable of a highspeed operation may be separately added in parallel in order to increase the operating speed, if a switch element not having an internal diode is used or fast transfer is necessary.

The serial switch unit 40 and the bypass switch unit 50 may bypass a cell that first reaches a set voltage or an end condition due to a difference between the capacities of cells in the constant current interval in which the multiple cells Cell #1 to #N that are connected in series are charged and discharged by using the main power conversion unit 20. In this case, static transfer that allows a cell to be bypassed is possible in the state in which the current of the main power conversion unit 20 flows because the two switches of each of the serial switch unit 40 and the bypass switch unit 50 are individually controlled by the control unit 70.

The control unit 70 may generate a control signal and apply the control signal to the switch elements Q1, Q2, Q3, and Q4 within the transfer switch unit 60.

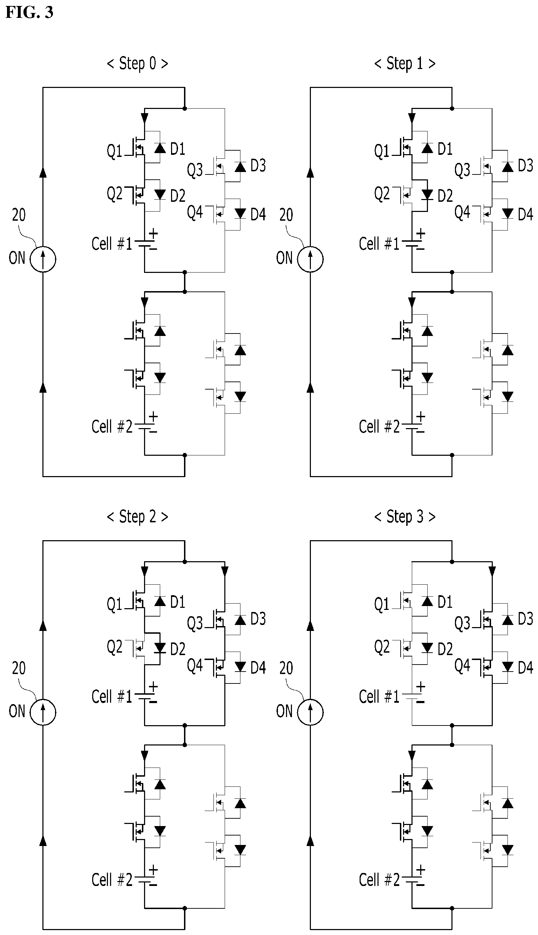

The control unit 70 may generate a control signal and apply the control signal to the main power conversion unit 20 and the auxiliary power conversion unit 30. That is, the control unit 70 may control operations of the main power conversion unit 20 and the auxiliary power conversion unit 30. Operations of the main power conversion unit 20 and the auxiliary power conversion unit 30 may be more specifically understood through descriptions of FIGS. 3 to 6 described later.

The control unit 70 may calculate a total voltage of the multiple cells Cell #1 to #N that are connected in series by measuring the voltage of an individual cell, and may transmit the calculated total voltage to the main power conversion unit 20. The control unit 70 may transmit the measured voltage of an individual cell to the main power conversion unit 20.

For example, the control unit 70 may measure the voltages of the multiple cells in real time or periodically in the constant voltage interval, and may identify a cell the measured voltage of which reaches a target voltage (i.e., a predetermined reference voltage that is individually defined) of each cell. The control unit 70 may output, to a corresponding auxiliary power conversion unit 30, a control command for operating the corresponding auxiliary power conversion unit 30 that is connected to the identified cell. Accordingly, the corresponding auxiliary power conversion unit 30 can suppress (e.g., discharge) the voltage of the identified cell from rising to the target voltage or more in response to the control command. Meanwhile, the control unit 70 may sum the measured voltages of the cells, and may output the summed total voltage to the main power conversion unit 20. Accordingly, the main power conversion unit 20 may perform constant voltage control on the multiple cells Cell #1 to #N based on the received total voltage. According to embodiments, the main power conversion unit 20 may perform constant voltage control so that a total voltage, that is, the sum of the voltages of the multiple cells Cell #1 to #N, is not greater than a predetermined reference total voltage. In this case, the reference total voltage may be a value that is previously determined according to charging and discharging scheduling and that is stored in the control unit 70, or may be calculated as a value that is obtained by adding the individual voltages of the multiple cells Cell #1 to #N, which are measured by the control unit 70 after the constant current interval for the multiple cells Cell #1 to #N is ended. For example, the control unit 70 may measure the voltages of the cells Cell #1 to #N, respectively, after a constant current charging mode and a mode change are sequentially completed (e.g., a time after a predetermined time elapses from the time when the constant current charging mode and/or the mode change is completed), and may calculate a reference total voltage by summing the measured voltages.

Meanwhile, if a set number of cells and the number of cells that have been actually connected are different from each other due to the non-insertion of a cell or a failure, the control unit 70 may transmit, to the main power conversion unit 20, information on the number of cells that are connected in series. Accordingly, the main power conversion unit 20 may perform a normal constant voltage operation regardless of the number of cells that are connected in series, by automatically changing a target voltage value in the constant voltage interval based on the received information on the number of cells.

According to the battery charging and discharging device (refer to FIG. 1) according to the embodiment of the present disclosure, when a cell that first reaches a set voltage or an end condition is bypassed due to a difference between the capacities of cells in the constant current interval in which the multiple cells Cell #1 to #N that are connected in series are charged and discharged by using the main power conversion unit 20, a corresponding cell can be switched at high speed without a disconnection of a current through the transfer switch unit 60. Accordingly, static transfer that allows a continuous operation is possible without affecting the characteristics of a cell by bypassing the cell in the state in which the current of the main power conversion unit 20 flows.

Furthermore, in the constant voltage interval in which the multiple cells Cell #1 to #N that are connected in series are charged and discharged by using the main power conversion unit 20, the main power conversion unit 20 may be used as main power, and a small capacity of each auxiliary power conversion unit 30 may be used in each individual cell. Accordingly, the overcharging of a cell having a low capacity, which occurs due to a difference between the capacities of cells, can be prevented, and an individual constant voltage operation that controls the voltage of a cell to be maintained at a set voltage is possible. In other words, in the constant voltage interval, the main power conversion unit 20 having a high voltage may be used as a main power supply that charges and discharges the multiple cells Cell #1 to #N that are connected in series, and the auxiliary power conversion unit 30 that is connected to an individual cell in parallel may be used for compensation corresponding to a difference between the capacities of cells. Accordingly, the main power conversion unit 20 and the auxiliary power conversion unit 30 may individually perform constant voltage operations.

Furthermore, the main power conversion unit 20 maintains a constant voltage operation based on a total value of the voltages of cells that are connected in series, regardless of a voltage drop of a wire and a contact part that are added in a process of connecting cells in series. Accordingly, the same constant voltage operation time as that in the existing parallel type charger and discharger is consumed. In other words, the control unit 70 that measures the voltage of an individual cell, sums the measured voltages, and transmits the sum to the main power conversion unit 20 can perform constant voltage control on the main power conversion unit 20 based on a total value of the voltages of cells that are connected in series, regardless of a voltage drop of a wire and a contact part, which occurs in a process of connecting the cells in series.

Furthermore, the main power conversion unit 20 and the auxiliary power conversion unit 30 may operate by a simple control algorithm by being independently controlled without being mutually associated. That is, in the constant voltage interval, the main power conversion unit 20 performs constant voltage control based on a total voltage of the voltages of cells that are connected in series, and the auxiliary power conversion unit 30 performs constant voltage control based on the voltage of an individual cell separately from the main power conversion unit 20. Accordingly, a current curve that is similar to that in an individual charging and discharging method can be generated, and control may be simplified because the main power conversion unit 20 and the auxiliary power conversion unit 30 independently operate.

Furthermore, the main power conversion unit 20 and the auxiliary power conversion unit 30 can share a direct current link, and can recover discharging energy, which is generated in a process of the auxiliary power conversion unit 30 operating, through the direct current link and reuse the discharging energy as charging energy for the main power conversion unit 20. Accordingly, an energy loss can be reduced.

The main power conversion unit 20 and the control unit 70 may be integrally constructed, if necessary.

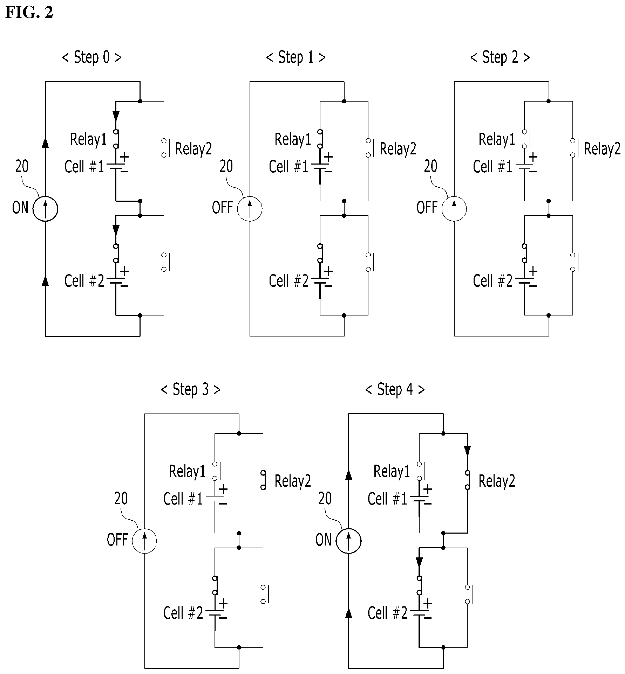

FIG. 2 is a diagram illustrating an operation state for each step when bypass using a relay is applied in the constant current interval, and is adopted in order to describe a difference from an embodiment of the present disclosure.

An operation of steps illustrated in FIG. 2 is performed in the sequence of Step 0, Step 1, Step 2, Step 3, and Step 4.

In FIG. 2, Step 0 illustrates an operation in a normal operation state.

In the normal operation state of Step 0, a relay 1 that is connected to the cell #1 in series is in an ON state, and a bypass relay 2 that is connected to the cell #1 in parallel is in an OFF state, so that a current flows through the relay 1. At this time, the main power conversion unit 20 performs a constant current operation and thus may be equalized as a current source. In FIG. 2, two cells have been illustrated as being connected in series for convenience of description, but the number of cells is not intended as being limited to two and the number of cells that are connected in series may be varied depending on the design.

In the normal operation state in the constant current interval, when the voltage of the cell #1 first reaches a set voltage because the capacity of the cell #1 is smaller than the capacity of the cell #2 or a bypass condition is established because the abnormality of the cell #1 is detected during an operation, the cell #1 is separated from the current path of the main power conversion unit 20 through control of the output of the power conversion device and a relay operation.

A process of separating the cell #1 is described. First, in Step 1, a current that flows into the cell #1 is blocked by stopping the main power conversion unit 20. Thereafter, in Step 2, the relay 1 that is connected to the cell #1 in series is turned off. Next, in Step 3, the bypass relay 2 that is connected to the cell #1 in parallel is turned on. Finally, in Step 4, a current is supplied to the cell #2 that is connected in series by driving the main power conversion unit 20.

In the transfer method using the relays, the reason why the process from Steps 1 to 4 is performed is that the cell #1 can autonomously operate as a voltage source. That is, when the bypass relay 2 is turned on in the state in which the relay 1 is turned on, a short circuit via the cell #1, the relay 1, and the bypass relay 2 is generated. When the short circuit is generated, there may be a problem in that a circuit is damaged due to the short current by the cell #1.

If a cell is bypassed by using a relay in the constant current interval according to the construction of FIG. 2, a discontinuity interval in which a current is turned off cannot be avoided as in Steps 1 to 3.

FIG. 3 is a diagram illustrating an operation state for each step during a static transfer bypass process in the constant current interval according to an embodiment of the present disclosure, and is a diagram illustrating a cell transfer process during a charging process.

An operation of steps illustrated in FIG. 2 is performed in the sequence of Step 0, Step 1, Step 2, and Step 3.

In FIG. 3, Step 0 illustrates an operation in the normal operation state in the charge interval.

In the normal operation state of Step 0, the switch elements Q1 and Q2 that are connected to the cells #1 and #2 in series are controlled in the ON state, and the switch elements Q3 and Q4 for bypass that are connected to the cells #1 and #2 in parallel are controlled in the OFF state. Accordingly, a current flows through the channel of the switch elements Q1 and Q2. At this time, the main power conversion unit 20 may be equalized as a current source by performing a constant current operation. Furthermore, the current of the main power conversion unit 20 does not flow into a bypass path by the diode D3 that is connected to the switch element Q3, which has been turned off, in parallel.

During a normal operation in the constant current interval, when a bypass condition (e.g., reaches a target voltage) is established in the cell #1, the cell #1 is separated from the current path of the main power conversion unit 20 sequentially through a process of Steps 1 to 3.

First, in Step 1, in the state in which the current flows as the main power conversion unit 20 operates as the current source, the switch element Q2 that is connected to the cell #1 in series is turned off. Although the switch element Q2 is turned off, the switch element Q2 is maintained in the state in which the current flows through the diode D2 that is connected to the switch element Q2 in parallel without interruption.

Next, in Step 2, the switch elements Q3 and Q4 that are connected to the cell #1 in parallel are turned on in the state in which the current flows through the diode D2. Accordingly, the current flows through the switch elements Q3 and Q4.

Finally, in Step 3, when the switch element Q1 is turned off, the cell #1 is fully separated from the current path of the main power conversion unit 20.

A core in such a separation process is to prevent the generation of a short circuit, which may occur due to the cell #1 capable of operating as a voltage source in the state in which the switch elements Q3 and Q4 have been turned on in Step 2. Accordingly, the generation of the short circuit attributable to the cell #1 in Step 2 can be prevented by first turning off the switch element Q2 in Step 1

If the operation (i.e., an operation of turning on the switch elements Q3 and Q4) in Step 2 is directly performed without the process of turning off the switch element Q2 in Step 1, a short circuit via the switch elements Q1 and Q2, which are connected to the cell #1 capable of operating as a voltage source, in series and the switch elements Q3 and Q4 that are connected to the cell #1 in parallel is generated. Accordingly, a circuit is damaged due to the short current attributable to the cell #1. In order to prevent such a short circuit, when the switch elements Q1 and Q2 is turned off before the switch elements Q3 and Q4 are turned on, a circuit may be damaged due to overvoltage because a condition in which a current source is opened occurs.

In contrast, when only the switch element Q2 of the switch elements Q1 and Q2 is turned off in Step 1 and the switch elements Q3 and Q4 are turned on in Step 2 normally, the short circuit attributable to the cell #1 that operates as a voltage source because the diode D2 is reversely biased can be prevented, and non-interruption static transfer of a current is possible.

In the charging process in the constant current interval, it may be considered that the serial switch unit 40 and the bypass switch unit 50 each adopt a semiconductor relay (SSR) including one switch element (e.g., an FET). For example, it may be considered that the serial switch unit 40 includes the switch element Q2 and the bypass switch unit 50 includes the switch element Q3. Assuming that Step 3 in FIG. 3 is performed based on such a construction, in the case of a region in which a voltage drop of a transmission path via the switch element Q3 is sufficiently large and the voltage of a cell is sufficiently low, a case in which a current is distributed and flows through a path via the diode D2 of the switch element Q2 may occur. When the current is distributed as described above, an error occurs in measuring the capacity of the cell. That is, if the serial switch unit 40 and the bypass switch unit 50 are each composed of a semiconductor relay (SSR) including one switch element (e.g., an FET), the cell cannot be fully separated in terms of circuit as described above. Accordingly, in an embodiment of the present disclosure, in order to solve such a problem, the serial switch unit 40 and the bypass switch unit 50 are each composed of a semiconductor relay (SSR) including two switch elements (e.g., FETs). According to such a construction, dual electrical conduction can be prevented because a cell is fully separated in terms of circuit.

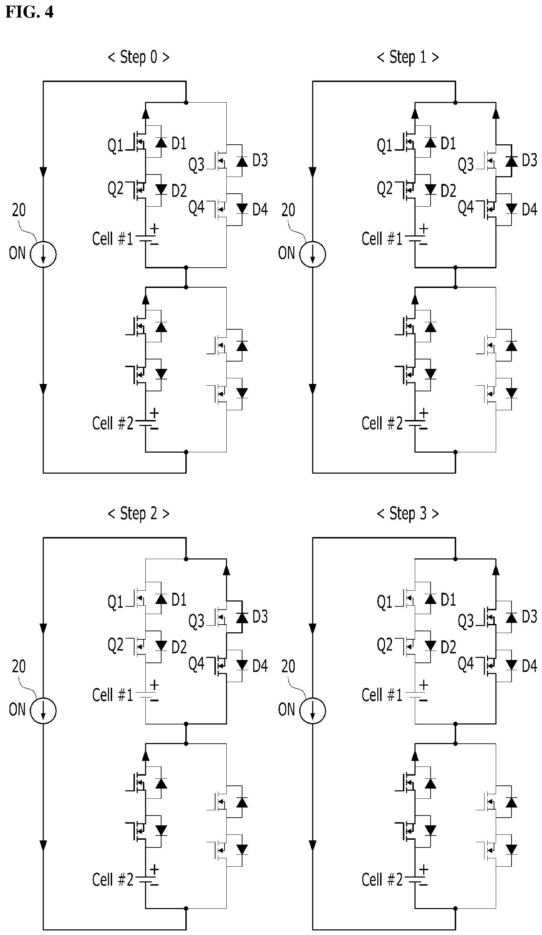

FIG. 4 is a diagram illustrating an operation state for each step during a static transfer bypass process in the constant current interval according to an embodiment of the present disclosure, and is a diagram illustrating a cell transfer process during the discharging process.

Operations of steps illustrated in FIG. 4 are performed in the sequence of Step 0, Step 1, Step 2, and Step 3.

In FIG. 4, Step 0 illustrates an operation in the normal operation state in the discharge interval.

As in charging, in the normal operation state, the switch elements Q1 and Q2 that are connected to the cells #1 and #2 in series are controlled in the ON state, and the switch elements Q3 and Q4 for bypass that are connected to the cells #1 and #2 in parallel are controlled in the OFF state. Accordingly, a current flows through the channel of the switch elements Q1 and Q2. At this time, the main power conversion unit 20 may be equalized as a current source because the main power conversion unit performs a constant current operation. Furthermore, the current of the main power conversion unit 20 does not flow into the bypass path by the diode D4 that is connected to the switch element Q4, which has been turned off, in parallel.

During a normal operation in the constant current interval, when a bypass condition is established in the cell #1, the cell #1 is separated from the current path of the main power conversion unit 20 sequentially through a subsequent process of Steps 1 to 3.

First, in Step 1, in the state in which the main power conversion unit 20 operates as a current source and the current flows, the switch element Q4 that is connected to the cell #1 in parallel is turned on. When the switch element Q4 is turned on, a discharging current flows via the switch element Q4 and the diode D3. Although the switch element Q4 is turned on, a short circuit attributable to the cell #1 capable of operating as a voltage source is not generated because the diode D3 is reversely biased.

Next, in Step 2, in the state in which a constant current flows through the switch element Q4 and the diode D3, the switch elements Q1 and Q2 that are connected to the cell #1 in series are turned off.

Finally, in Step 3, when the switch element Q3 is turned on, the cell #1 is fully separated from the current path of the main power conversion unit 20.

As in the charging mode, in the discharging mode, non-interruption static transfer of a current is possible because the generation of a short circuit attributable to the cell #1 capable of operating as a voltage source is prevented by using the diode D3 in principle.

In the discharging process in the constant current interval, it may be considered that the serial switch unit 40 and the bypass switch unit 50 each adopt a semiconductor relay (SSR) including one switch element (e.g., an FET). For example, it may be considered that the serial switch unit 40 includes the switch element Q2 and the bypass switch unit 50 includes the switch element Q3. Assuming that Step 0 of FIG. 4 is performed based on such a construction, in the case of a region in which a voltage drop of a transmission path via the switch element Q2 is sufficiently large and the voltage of a cell is sufficiently low, a case in which a current is distributed and flows through a path via the diode D3 of the switch element Q3 may occur. If the current is distributed as described above, an error occurs in measuring the capacity of the cell. That is, if the serial switch unit 40 and the bypass switch unit 50 are each composed of the semiconductor relay (SSR) including one switch element (e.g., an FET), the cell cannot be fully separated in terms of circuit as described above. Accordingly, in an embodiment of the present disclosure, in order to solve such a problem, the serial switch unit 40 and the bypass switch unit 50 are each composed of a semiconductor relay (SSR) including two switch elements (e.g., FETs). According to such a construction, dual electrical conduction can be prevented because a cell is fully separated in terms of circuit.

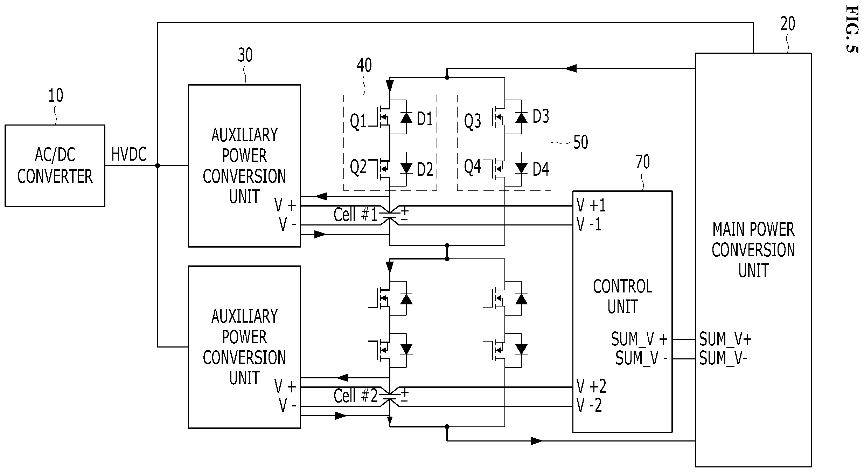

FIG. 5 is a diagram illustrating an individual cell constant voltage operation state in the constant voltage interval according to an embodiment of the present disclosure.

As in the constant current interval, in the constant voltage interval, the main power conversion unit 20 plays a role as a main power supply device that supplies energy to the cells Cell #1 to #N that are connected in series. Furthermore, the auxiliary power conversion unit 30 plays a role to suppress the overcharging of an individual cell, which occurs due to a difference between the capacities of the cells Cell #1 to #N.

When the constant current interval is ended and an operation mode is changed into the constant voltage interval, the control unit 70 instructs the main power conversion unit 20 and the auxiliary power conversion unit 30 to perform a constant voltage operation, sums the voltages of individual cells, and transmits the sum to the main power conversion unit 20. That is, when the constant current interval is ended and the constant voltage interval is started, the control unit 70 measures the voltages of multiple cells, and transmits a total voltage of the measured voltages of the cells to the main power conversion unit 20. In this case, when instructing the main power conversion unit 20 and the auxiliary power conversion unit 30 to perform the constant voltage operation, the control unit 70 may also transmit a target voltage (i.e., a predetermined reference voltage that is individually defined) of an individual cell.

The main power conversion unit 20 performs the constant voltage operation on the cells Cell #1 to #N based on the total voltage of the cells Cell #1 to #N that are connected in series. In this case, the total voltage may be a value, that is, the sum of the target voltages of the individual cells.

When the operation in the constant voltage interval is started, the control unit 70 may measure and transmit the voltage of each cell in real time or periodically.

When the voltage of an individual cell having a low capacity reaches a target voltage of the cell (i.e., the corresponding cell) during the constant voltage operation, the auxiliary power conversion unit 30 that is connected to the corresponding cell in parallel operates. At this time, the auxiliary power conversion unit 30 controls the corresponding cell to maintain a predetermined voltage (i.e., the target voltage of the corresponding cell) by suppressing the voltage of the corresponding cell from rising more than the target voltage. Such an operation is maintained up to the time when a constant voltage charge interval is ended. In other words, the control unit 70 measures the voltages of the multiple cells in the constant voltage interval, and identifies a cell the measured voltage of which has reached its target voltage. In this case, when an identified cell is present, the control unit 70 outputs, to a corresponding auxiliary power conversion unit 30, a control command for operating the auxiliary power conversion unit 30 that is connected to the identified cell. Accordingly, the corresponding auxiliary power conversion unit 30 suppresses (e.g., discharges) the voltage of the corresponding cell from rising more than the target voltage in response to the control command.

Meanwhile, in the constant voltage charge interval, a case in which an operation of suppressing the voltage of an individual cell from rising more than a target voltage thereof is not properly performed because a problem occurs in the charging and discharging characteristics of the cell may be considered. For example, it is assumed that the number of cells that are connected in series is three and the main power conversion unit 20 performs a constant voltage operation. In this case, the charging voltage of a first cell may be slightly higher than a target voltage. In such a case, a corresponding auxiliary power conversion unit 30 may easily maintain the charging voltage of the first cell at the target voltage by discharging the first cell. However, the overcharging of the first cell to a voltage higher than a threshold to the extent that it is difficult for the auxiliary power conversion unit 30 to cover a voltage beyond the target voltage may continue because a problem occurs in the charging and discharging characteristics of the first cell. In this case, the control unit 70 may bypass the first cell by controlling the transfer switch unit 60. That is, in the constant voltage interval, the control unit 70 may detect a cell that is overcharged, among multiple cells, may determine whether the detected cell satisfies a specific bypass condition, and may bypass the detected cell by controlling the transfer switch unit 60 corresponding to the detected cell when the specific bypass condition is satisfied. In this case, the specific bypass condition may be one or more of the maintenance of the voltage of the detected cell at a voltage higher than a target voltage for a predetermined time and the generation of a voltage peak higher than the target voltage more than a certain number of times.

When the first cell is bypassed as described above, the main power conversion unit 20 has only to perform a constant voltage operation based on a total voltage of the voltages of the remaining two cells. That is, the control unit 70 subtracts the capacity of the first cell, which has been previously stored, from a previous total voltage because the first cell has been bypassed, and applies, to the main power conversion unit 20, a result value of subtraction as the current total voltage. Accordingly, the main power conversion unit 20 has only to perform a constant voltage operation on the remaining two cells based on the current total voltage because the cell operates in a condition having a small deviation.

Meanwhile, a deviation between the voltages of individual cells is not great because a process of bypassing a cell that has first reached its target voltage has been performed based on the voltages of the individual cells in a previous constant current charge interval. Furthermore, the capacity of the auxiliary power conversion unit 30 may be designed as a low capacity having an object of correcting a deviation between the capacities of the cells because the main power conversion unit 20 operates in the state in which a connection wire and a contact voltage between the cells have been excluded by performing constant voltage control based on a total voltage of the voltages of the individual cells. For example, electric energy (i.e., a rated capacity) of the auxiliary power conversion unit 30 may be limited to approximately 5% to 10% or less of the main power conversion unit 20 by setting a reference value of a deviation between the capacities of cells. That is, the capacity of the auxiliary power conversion unit 30 may be designed to be smaller than that of the main power conversion unit 20, because the auxiliary power conversion unit 30 operates only in the constant voltage interval and enters a constant voltage interval by adjusting the voltages of individual cells to a voltage having the same level through a bypass process in a previous constant current interval.

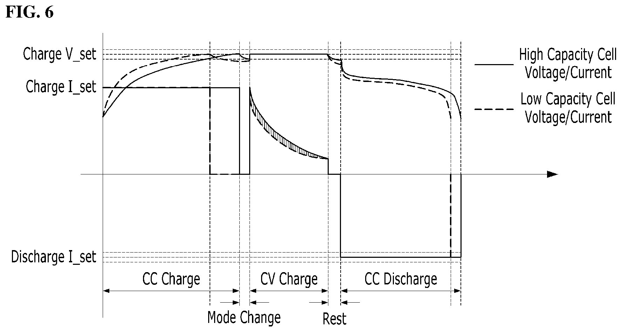

FIG. 6 is a diagram illustrating charging and discharging characteristics of secondary batteries having a capacity difference according to an embodiment of the present disclosure, and illustrates a characteristic diagram of the voltages and currents of two secondary cells when charging and discharging processes are performed on the secondary cells having a capacity difference by using the device that is proposed in the present disclosure.

The charging and discharging of the secondary cell may be performed in the sequence of constant current charging, constant voltage charging, and constant current discharging.

In the constant current charge interval, the two cells (a high capacity cell and a low capacity cell) that are connected in series are switched with the same current by using the main power conversion unit 20. In this case, in the case of the cell having a low capacity (the low capacity cell), among the two cells, a rise slope of the voltage of the low capacity cell is steeper than that of the cell having a high capacity (the high capacity cell). As a result, the voltage of the low capacity cell quickly reaches a target voltage Charge V_set. The cell (i.e., the low capacity cell) having the voltage reached the target voltage is separated from the current path of the main power conversion unit 20 through a bypass process for preventing overcharging. The current of the main power conversion unit 20 is continuously maintained even in such a transfer process.

Thereafter, when the cell having a high capacity (i.e., the high capacity cell) reaches the target voltage Charge V_set, the constant current charge interval is ended.

The two cells have been described as an example in order to describe the concept, but such a process is identically applied although the number of cells that are connected in series is increased.

After the cell having a high capacity reaches the target voltage and thus the constant current charge interval is ended, a constant voltage charge interval is started. A mode change interval (Mode Change) is slightly performed between the constant current charge interval and the constant voltage charge interval. In the mode change interval, switches that are connected to cells, which have been bypassed in a previous constant current interval and have been separated from a main current path, in parallel are turned off, and switches that are connected in series are turned on. An operation of connecting cells to the main power conversion unit 20 again is performed through such a process, and then a constant voltage charging operation is started.

The time that is necessary for the mode change is approximately within tens of ms to 1 sec for a switch operation. It is possible to artificially increase and set the time, in order to reduce a deviation between the characteristics of cells attributable to a stabilization time difference which occurs due to the bypass of an individual cell and a difference between times when the bypasses of the individual cells are ended.

In the constant voltage charge interval, in general, a current drop slope of a cell having a low capacity is steeper than that of a cell having a high capacity. This occurs due to a difference between process times. The voltage of the cell having a low capacity may rise because a process time difference attributable to a difference between the capacities of individual cells cannot occur in a method of charging, by the main power conversion unit 20, cells that are connected in series with the same current en bloc. In this case, the auxiliary power conversion unit 30 that is connected to the individual cell operates to discharge the cell having a low capacity, so that overcharging is prevented and a constant voltage is charged based on a target voltage of the individual cell.

The amount of energy that is discharged by the auxiliary power conversion unit 30 is an accumulated value of a difference between the currents of the cell having a high capacity and the cell having a low capacity in the constant voltage charge interval (CV Charge) of FIG. 6, and is the same as the area of a slanted part in the characteristic diagram. In the constant voltage interval, the current of an individual cell may be calculated as a difference between the current of the main power conversion unit 20 and the current of the auxiliary power conversion unit 30 for the individual cell.

In particular, according to embodiments of the present disclosure, a cell (i.e., a low capacity cell) that has first reached its target voltage is separated from the current path of the main power conversion unit 20 through a bypass process for preventing overcharging, and charging is continuously performed on the remaining cells (i.e., a high capacity cell). Accordingly, the low capacity cell and the high capacity cell can stably reach their target voltages. Accordingly, a rated capacity of the auxiliary power conversion unit 30 that individually controls the charging and discharging of each cell may be set to be much smaller than a rated capacity of the main power conversion unit 20 because the constant voltage charge interval is entered in the state in which a deviation between the voltage of each cell and the target voltage is small. In particular, the entire power conversion system can be implemented to have a low capacity, a low cost, and a small size because a rated capacity of the auxiliary power conversion unit 30 that is relatively multiple may be designed to be relatively small.

After the constant voltage charging is ended, a constant current discharging operation is performed after a pause interval (Rest) for a set time.

In the constant current discharge interval (CC Discharge), a voltage drop slope of the cell having a low capacity becomes steep, and the cell having a low capacity first reaches an end voltage. The cell that has reached the end voltage is separated from the current path of the main power conversion unit 20 through a bypass process.

The constant voltage discharge interval is not present in a common secondary cell activation process, but the device that is proposed in the present disclosure may be applied to the common secondary cell activation process although the constant voltage discharge interval is included. In this case, in order to prevent the overdischarging of a cell having a low capacity by using the auxiliary power conversion unit 30 in the constant voltage discharge interval, the auxiliary power conversion unit 30 has to perform a charging operation, contrary to the discharging operation performed in the constant voltage charge interval. In this case, a device capable of bidirectional power conversion needs to be applied to the auxiliary power conversion unit 30.

The above description is merely a description of the technical spirit of the present disclosure, and those skilled in the art may change and modify the present disclosure in various ways without departing from the essential characteristic of the present disclosure. Accordingly, the embodiments disclosed in the present disclosure should not be construed as limiting the technical spirit of the present disclosure, but should be construed as describing the technical spirit of the present disclosure. The technical spirit of the present disclosure is not restricted by the embodiments. The range of protection of the present disclosure should be construed based on the following claims, and all of technical spirits within an equivalent range of the present disclosure should be construed as being included in the scope of rights of the present disclosure.

## Claims

1. A battery charging and discharging device comprising:
a main power conversion unit configured to charge and discharge multiple cells that are connected in series;
multiple auxiliary power conversion units configured to charge and discharge the multiple cells, respectively; and
a control unit configured to control the main power conversion unit so that constant voltage control is performed on the multiple cells based on a total voltage of voltages of the multiple cells and to control the multiple auxiliary power conversion units so that the voltage of each of the multiple cells is maintained at a target voltage of a corresponding cell in a constant voltage interval for the multiple cells.

2. The battery charging and discharging device of claim 1, wherein the control unit suppresses the voltage of a cell that first reaches the target voltage, among the multiple cells, in the constant voltage interval from rising more than the target voltage by operating a corresponding auxiliary power conversion unit.

3. The battery charging and discharging device of claim 2, wherein the auxiliary power conversion unit maintains the voltage of the cell that first reaches the target voltage at the target voltage by discharging the cell that first reaches the target voltage.

4. The battery charging and discharging device of claim 1, further comprising multiple transfer switch units connected to the multiple cells, respectively, in a one-to-one way and each configured to perform a connection and separation between each cell and the main power conversion unit.

5. The battery charging and discharging device of claim 4, wherein the transfer switch unit comprises:
a serial switch unit that is connected to each of the multiple cells in series; and
a bypass switch unit that is connected to each of the multiple cells in parallel,
the serial switch unit comprises first and second semiconductor relays that are mutually connected in series and first and second diodes that are connected to the first and second semiconductor relays in parallel, respectively, and
the bypass switch unit comprises third and fourth semiconductor relays that are mutually connected in series and third and fourth diodes that are connected to the third and fourth semiconductor relays in parallel, respectively.

6. The battery charging and discharging device of claim 5, wherein in the constant voltage interval,
the main power conversion unit supplies energy to the multiple cells that are connected in series through the serial switch unit, and
the auxiliary power conversion unit suppresses overcharging of an individual cell attributable to a difference between capacities of the multiple cells.

7. The battery charging and discharging device of claim 5, wherein the control unit
detects a cell that is overcharged, among the multiple cells, in the constant voltage interval,
determines whether the detected cell satisfies a specific bypass condition, and
bypasses the transfer switch unit corresponding to the detected cell by controlling the transfer switch unit when the specific bypass condition is satisfied.

8. The battery charging and discharging device of claim 7, wherein the specific bypass condition is one or more of a maintenance of a voltage of the detected cell at a voltage higher than a target voltage for a predetermined time and a generation of a voltage peak higher than the target voltage more than a certain number of times.

9. The battery charging and discharging device of claim 7, wherein the main power conversion unit performs a constant voltage operation based on a total voltage of remaining cells except the bypassed cell as the detected cell is bypassed.

10. The battery charging and discharging device of claim 5, wherein the control unit
bypasses a cell that first reaches a set voltage or an end condition in a constant current interval in which the multiple cells that are connected in series are charged and discharged through the main power conversion unit, and
bypasses the cell that has reached the set voltage or the end condition in a state in which a current of the main current conversion unit flows, by individually controlling the serial switch unit and the bypass switch unit.

11. The battery charging and discharging device of claim 5, wherein the control unit
enables the main power conversion unit to perform a constant current operation when a constant current charge interval is started, and
turns on the first and second semiconductor relays and turns off the third and fourth semiconductor relays.

12. The battery charging and discharging device of claim 11, wherein a current of the main current conversion unit does not flow into a bypass path by the third diode that is connected to the third semiconductor relay, which has been turned off, in parallel.

13. The battery charging and discharging device of claim 11, wherein the control unit turns on the third and fourth semiconductor relays and then turns off the first semiconductor relay, after turning off the second semiconductor relay that has been turned on with respect to a corresponding cell on which a bypass condition has been established in a state in which the current of the main power conversion unit flows when the bypass condition is established in one or more cells during an operation in the constant current charge interval.

14. The battery charging and discharging device of claim 13, wherein the second diode that is connected to the second semiconductor relay in parallel prevents a generation of a short circuit attributable to a cell that is reversely biased and that has reached a set voltage or an end condition, when the third and fourth semiconductor relays are turned on after the second semiconductor relay is turned off.

15. The battery charging and discharging device of claim 5, wherein the control unit
causes the main power conversion unit to perform a constant current operation when a constant current discharge interval is started, and
turns on the first and second semiconductor relays and turns off the third and fourth semiconductor relays.

16. The battery charging and discharging device of claim 15, wherein a current of the main current conversion unit does not flow into a bypass path by the fourth diode that is connected to the fourth semiconductor relay, which has been turned off, in parallel.

17. The battery charging and discharging device of claim 15, wherein the control unit turns off the first and second semiconductor relays and then turns on the third semiconductor relay, after turning on the fourth semiconductor relay that has been turned off with respect to a corresponding cell on which a bypass condition has been established in a state in which a current of the main power conversion unit flows when the bypass condition is established in one or more cells during an operation in the constant current discharge interval.

18. The battery charging and discharging device of claim 17, wherein the third diode that is connected to the third semiconductor relay in parallel prevents a generation of a short circuit attributable to a cell that is reversely biased and that has reached a set voltage or an end condition although the fourth semiconductor relay that has been turned off is turned on.

19. The battery charging and discharging device of claim 1, wherein a rated capacity of the auxiliary power conversion unit is smaller than a rated capacity of the main power conversion unit.
